# EUROPEAN PATENT SPECIFICATION

(11) **EP 0 995 622 B1**
(45) Date of publication and mention of the grant of the patent: **19.03.2003**
(21) Application number: 99305209.1
(22) Date of filing: 01.07.1999
(51) Int. Cl.: B60J 10/00

(54) **Reinforcing cores or carriers for flexible products**
Verstärkungskerne- oder Einlagen für biegsame Erzeugnisse
Noyaux ou armatures de renforcement pour produits souples

(30) Priority: 19.10.1998 GB 9822830
(43) Date of publication of application: 26.04.2000
(73) Proprietor: GenCorp Property Inc., Sacramento, CA 95853-7012 (US)
(72) Inventor: Richard, Jean-Paul, 26360 Theuville (FR)
(74) Representative: Foster, David Martyn

(56) References cited:
- EP-A- 0 531 115
- FR-A- 2 390 668
- FR-A- 2 517 010
- GB-A- 1 556 655
- US-A- 3 037 895
- US-A- 4 046 940
- US-A- 4 902 480

## Description

The invention relates to a longitudinally extending reinforcing carrier for a flexible longitudinally extending strip, according to the preamble of claim 1, comprising longitudinally extending carrier element means, and at least one flexible longitudinal substantially inextensible member secured to and extending along the carrier element means at a predetermined position relative to its longitudinal axis.

The invention also relates to a method of manufacturing a reinforcing longitudinally extending carrier for a flexible longitudinally extending strip, according to the preamble of claim 21, comprising the steps of forming longitudinally extending carrier element means, and securing at least one flexible longitudinal substantially inextensible member to and extending it along the carrier element means at a predetermined position relative to its longitudinal axis.

Such a carrier and method are known from FR-A-2390668. This document discloses a carrier that is folded around a metal thread and crimped thereto. The carrier comprises a plurality of transverse bars coupled together by at least one longitudinally extending bar.

Similar carrier and method are known from GB-A-1 556 655. In this known carrier, the flexible longitudinal substantially inextensible member is a wire which is individually welded to each carrier element. This is a difficult and time-consuming process.

The invention is defined in the independent claims.

Reinforcing carriers embodying the invention, and for use in sealing, trimming, finishing and glass-guiding strips used in motor vehicle body construction, will now be described, by way of example only, with reference to the accompanying diagrammatic drawings in which:
Figure 1 is a perspective view showing an early stage in the manufacture of one of the carriers;
Figure 2 is a perspective view showing a later stage in the manufacture of the carrier of Figure 1;
Figure 3 is a perspective view showing a further stage in the manufacture of the carrier of Figures 1 and 2;
Figure 4 is a plan view showing an initial stage in the manufacture of a second one of the carriers;
Figure 5 is a plan view showing the following stage in the manufacture of the carrier of Figure 4;
Figure 6 is a perspective view corresponding to Figure 5;
Figure 7 is a perspective view showing a later stage in the manufacture of the carrier of Figures 4 to 6;
Figure 8 is a perspective view showing a still further stage in the manufacture of the carrier of Figures 4 to 7;
Figure 9 is a plan view of an early stage in the manufacture of a third one of the carriers;
Figure 10 is a plan view showing the next stage in the manufacture of the carrier of Figure 9;
Figure 11 is a perspective view corresponding to Figure 10;
Figure 12 is a perspective view showing a further stage in the manufacture of the carrier of Figures 9 to 11;
Figure 13 corresponds to Figure 12 but shows the following stage in the manufacture of the carrier of Figures 9 to 12;
Figure 14 is an end view of a carrier according to the form shown in Figures 1 to 3, Figures 4 to 8 or Figures 9 to 13, bent into channel form and taken on the line XIV to XIV of Figure 15;
Figure 15 corresponds to Figure 14 but shows a side view of the carrier curved to follow an "S" shape;
Figure 16 corresponds to Figure 14 and is a section on the line XVI-XVI of Figure 17;
Figure 17 is a side view of the carrier of Figure 16, curved to follow an "S" shape;
Figure 18 corresponds to Figures 14 and 16 and is a section on the line XVIII-XVIII of Figure 19;
Figure 19 is a side view of the carrier of Figure 18, curved to follow an "S" form;
Figure 20 is a view corresponding to Figures 14,16 and 18 and is being a section on the line XX-XX of Figure XXI;
Figure 21 is a side view of the carrier of Figure 20, curved to follow an "S" form; and
Figure 22 is a cross-sectional view of a sealing strip embodying one of the carriers shown in the preceding Figures.

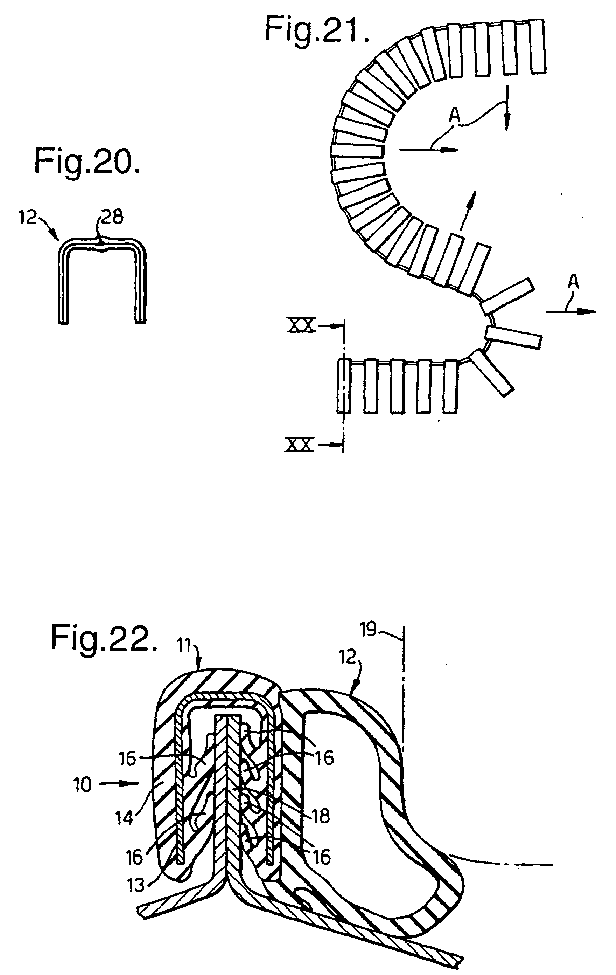

The carriers to be described in more detail below may be used in channel-shaped form for reinforcing channel-shape sealing, trimming, finishing and glass-guiding strips used in motor vehicle body construction. Figure 22 shows, by way of example, a sealing strip 10 such as for fitting around the door frame in a motor vehicle body. The sealing strip 10 comprises a channel-shaped gripping portion 11 and a sealing portion 12. The gripping portion 11 comprises a channel-shaped carrier 13 incorporated into plastics or rubber or similar material 14. The material 14 may be produced by extrusion, with the carrier being incorporated into it during the extrusion process such as by using a cross-head extruder. The material 14 incorporates integral internal gripping lips 16. As shown in the Figure, the gripping portion 11 embracingly grips a mounting flange 18, which may be the flange running around the door opening of the motor vehicle, where the inner and outer body panels are welded together. The lips 16 help to ensure that the gripping portion 11 firmly grips the flange.

The gripping portion 11 supports the sealing portion 12 which may be made of soft flexible material such as foamed plastics or rubber material. The sealing portion 12 may be integrally extruded with the material 14 or may be produced separately and secured thereto such as by adhesive.

In this way, the gripping portion it supports the sealing portion 12 to run along the outside edge of the door opening so as to be partially compressed by the closing door (shown diagrammatically at 19), thus providing a weather seal.

The carrier 13 is shown only generally in Figure 22. Various forms of the carrier will be described in detail below. The carrier is made of resilient material such as metal, and reinforces the material of the gripping portion 11 to ensure that it grips the flange 18 firmly.

However, it should be understood that the carriers to be described in more detail below may be used in other forms of strip, such as window guide channels. In other applications of the carriers, they need not be in channel form and need not be for use in motor vehicle body construction.

Strips incorporating the carriers may be required to be bent or curved in use. For example, the sealing strip shown in Figure 22 may need to be bent to follow curves at the corners of the door frame. It is important that the reinforcing carrier 13 not only permits such bending but ensures that the sealing strip follows the correct bending line and maintains a neat and pleasing appearance. In the manner to be explained, the carriers to be described in more detail below enable the position of the neutral bending axis of the strip to be adjusted and controlled; the neutral bending axis is the notional line along which neither compression nor tension occurs at a bend.

In the form of the carriers to be described in more detail below, they comprise elements arranged tranverse or widthwise to the length of the carrier and side-by-side along the carrier, and interconnected in the form of a "ladder" by one or more flexible longitudinal elements in the form of wires, fibres or threads, which are positioned to control the neutral bending axis. The flexible longitudinal elements may be made of metallic wire, textile thread, glass fibre or other material which is flexible and preferably inextensible but enables longitudinal compression of the carrier.

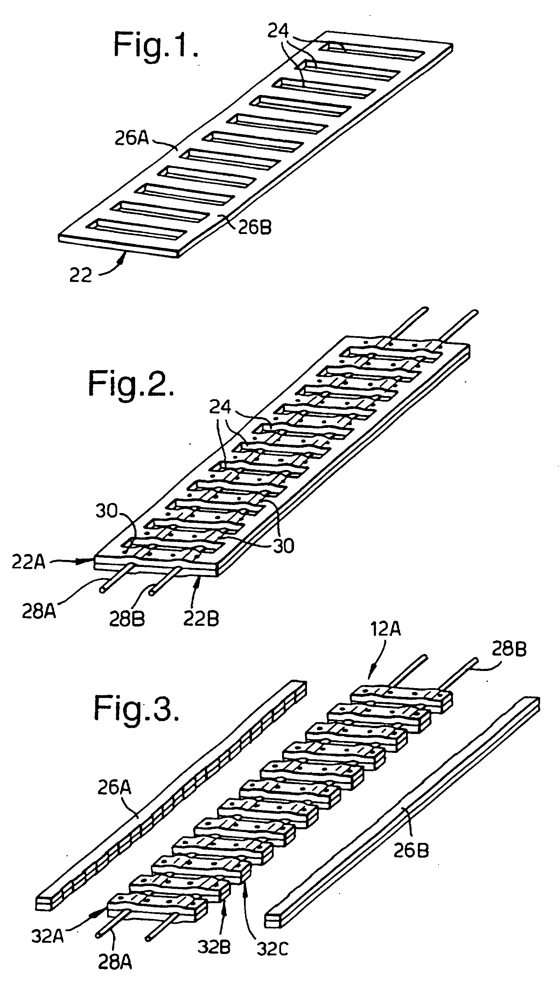

Figure 1 shows the first stage in the manufacture of one form of the carrier. A metal blank 22 is formed with slots 24 by a suitable cutting action. The blank 22 may be of predetermined length or it may be of generally indefinite length, being formed with the slots 24 as it is unwound from a drum or bobbin. Each slot 24 stops short of the edge portions 26A and 26B of the blank.

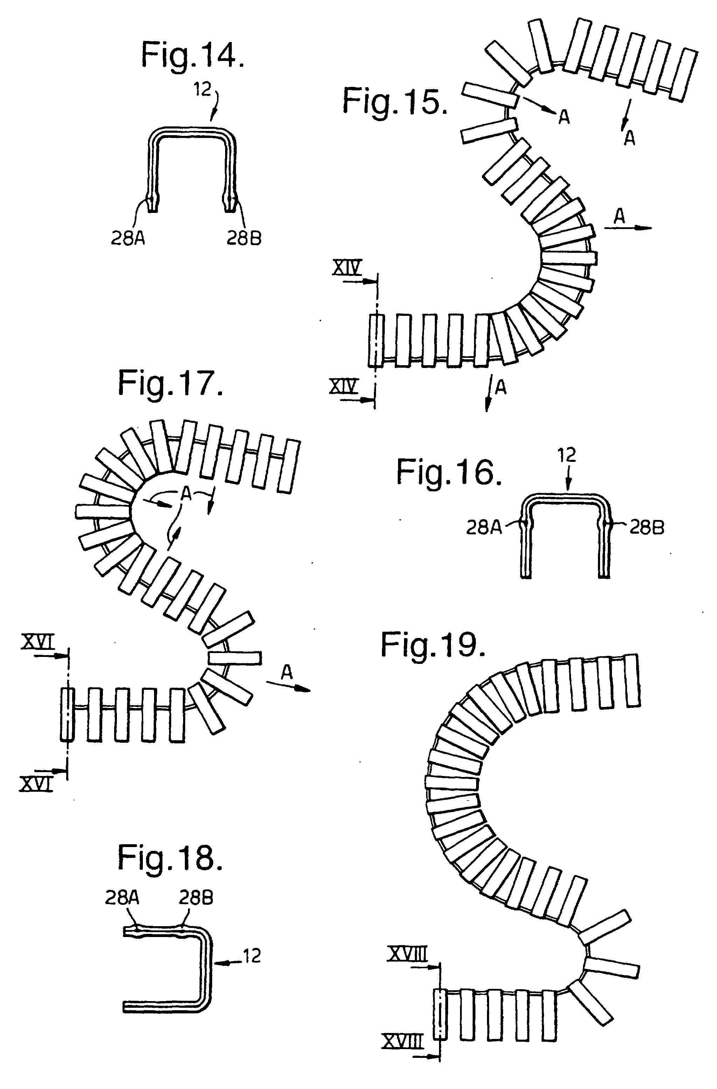

Two slotted blanks, each of the form shown in Figure 1, are then placed one on top of the other as shown at 22A and 22B in Figure 2, with (in this case) two flexible longitudinal members 28A,28B positioned between them. The members 28A,28B are so positioned as to ensure that the neutral bending axis of the finished carrier will be at the correct location, as will be described in more detail below with reference to Figures 14 to 21. The two blanks 22A,22B are then secured together so as to hold the members 28A,28B in the correct positions. For example, the blanks 22A,22B may be secured together by soldering or welding, such as in the positions shown by the dots 30. However, they could be secured together in any other suitable way.

The third stage in the manufacture of the carrier is shown in Figure 3, where the edge regions 26A,26B are broken or cut off and discarded. In this way, a carrier 12A is produced comprising separate transverse members 32A,32B,32C... interconnected by the flexible longitudinal elements 28A,28B. Each transverse member 32A,32B,32C... is made up of two layers respectively formed from the blanks 22A,22B of Figure 2.

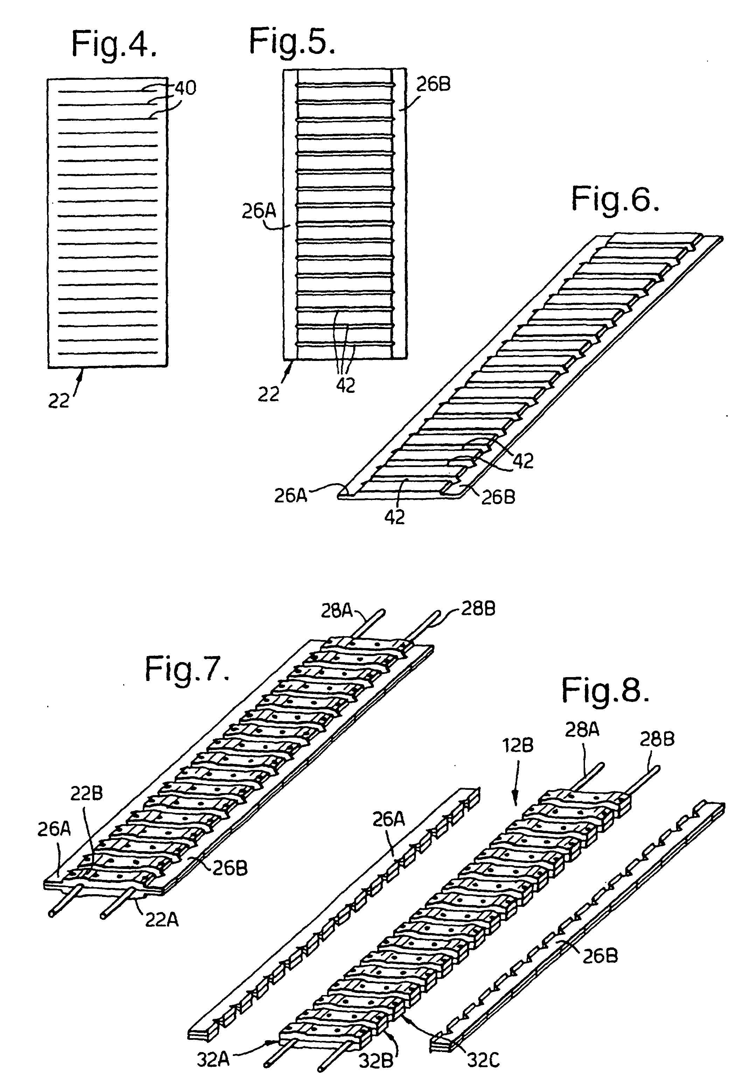

In the carrier produced as shown in Figures 4 - 8, items corresponding to those in Figures 1 - 3 are similarly referenced.

As shown in Figure 4, a blank 22 is formed with a succession of slits 40, each slit extending completely through the blank 22 but stopping short of the edge regions 26A,26B.

As shown in Figures 5 and 6, the slit blank 22 of Figure 4 is then subjected to a thinning-down operation. This thinning-down operation takes place along the length of the blank 22 but is confined to the edge regions 26A,26B. The thinning-down operation may be achieved by passing the blank 22 between the bight of a pair of rollers which are designed to provide a squeezing operation to the material of the blank along the edges 26A,26B but not elsewhere. The effect of the thinning-down operation along the edge regions 26A,26B is to stretch the blank lengthwise so as to convert the slits 40 into slots 42 as shown in Figures 5 and 6.

Two blanks 22 of the form shown in Figures 5 and 6 are then placed one on top of the other as shown at 22A,22B in Figure 7, with the flexible longitudinal members 28A,28B being first positioned between them at the desired locations. Again, the blanks 22A,22B are secured together such as in the manner described with reference to Figure 2.

The edge regions 26A,26B of each slotted blank are then broken or cut off and discarded as shown in Figure 8. The carrier 12B remains and is of the same general configuration as the carrier 12A of Figure 3.

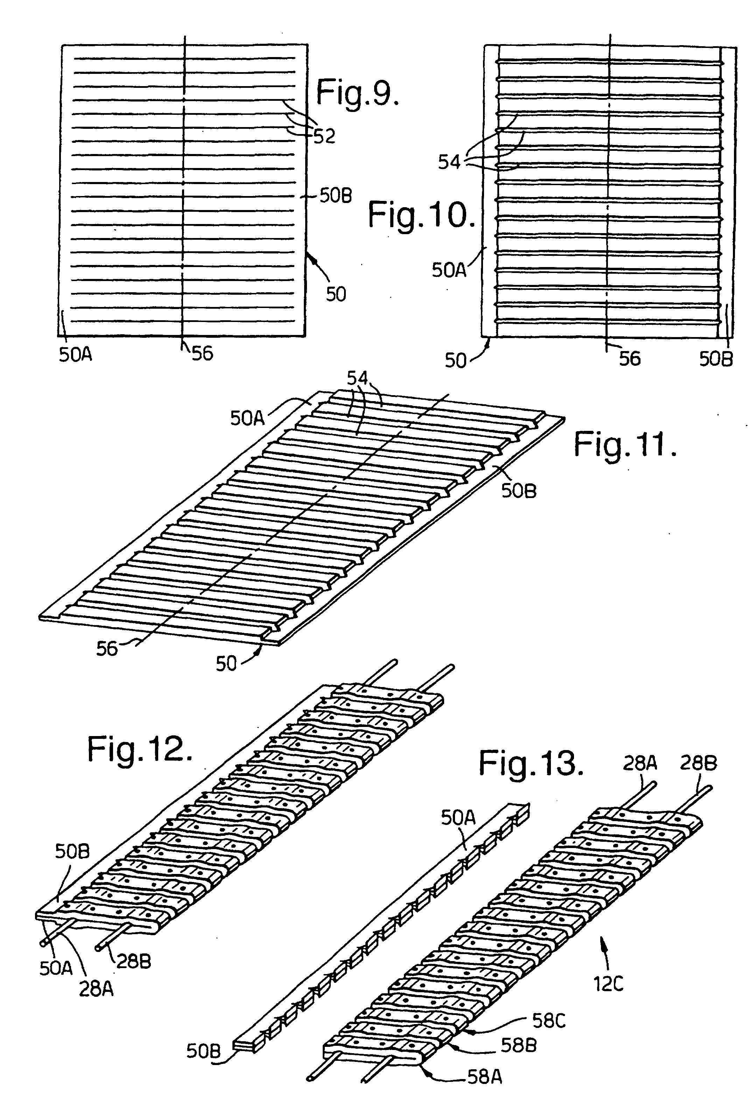

Items in Figures 9 - 13, describing the formation of another form of carrier, items which correspond to items in the preceding Figures are similarly referenced.

As shown in Figure 9, a blank 50 is used, the blank 50 being of substantially greater width than the blank 22 of Figures 1 and 4. The blank 50 has a width which is approximately twice the width of the blank 22. Slits 52 are formed in the blank 50, each slit being similar to the slits of Figure 4. Each slit 52 extends through the thickness of the blank 50 but stops short of the longitudinal edge regions 50A,50B of the blank 50.

The slit blank 50 is then subjected to a thinning-down operation along its edge regions 50A and 50B, as shown in Figures 10 and 11. This thinning-down operation corresponds to the thinning-down operation described with reference to Figures 5 and 6 and may be carried out in a similar way. The effect of the thinning-down operation is to expand the slits 52 into slots 54.

In the next stage of the manufacturing process, the thinned-down blank of the form shown in Figures 10 and 11 is then bent over on itself along a bending line 56 corresponding to the longitudinal line of symmetry of the blank. During this bending operation, the flexible longitudinal members 28A,28B are positioned between the bent-over portions of the blank as shown in Figure 12, the members being positioned in the desired locations. The two superimposed bent-over portions are then secured together in the same way as described with reference to Figure 2 or Figure 8.

As shown in Figure 13, the next stage in the procedure is to break off or cut off the superimposed edge regions 50A,50B which are then discarded. A carrier 12C is then formed, which is made up of transverse carrier elements 58A,58B,58C..., each of which comprises superimposed portions of the bent-over blank 50, these carrier elements being interconnected by the flexible longitudinal members 28A, 28B.

After the manufacturing stage described with reference to the foregoing Figures, each of the carriers 12A,12B and 12C can be bent into channel-shape, if this is the desired final shape. It may be preferable, however, for this bending into channel-shape to be carried out before removal of the edge regions of the blank. Thus, in the case of the carrier 12A, it could be bent into channel-shape while in the form shown in Figure 2, with the edge regions 26A,26B being thereafter removed. In the case of the channel 12B, it could be bent into channel-shape while in the form shown in Figure 7, with the edge regions 26A,26B thereafter removed. In the case of the carrier 12C, it could be bent into channel-shape while in the form shown in Figure 13, with the edge regions 50A,50B being thereafter removed.

After bending into channel-shape, each carrier can then be incorporated into the flexible material 14 of Figure 22.

In this way, a carrier can be manufactured with one or more flexible longitudinally extending members 28A,28B, the exact position of the or of each such flexible longitudinal members being easily adjusted during manufacture and then securely fixed in position during the manufacturing stage, as described with reference to Figures 3,7 and 12.

Figure 14 shows the end view of a carrier (such as of the form of carrier 12A,12B or 12C), in which there are two flexible longitudinal members 28A,28B, each of these being positioned to run adjacent to the terminal edge of each side wall of the channel, that is, immediately adjacent the channel mouth. Figure 15 shows the bending of such a carrier into an "S" form, and shows how the flexible longitudinal members 28A,28B fix the location of the neutral bending axis to coincide with the plane in which the members 28A,28B lie. Thus, this plane lies substantially on the outside or substantially on the inside of each bend, according to the direction of the bend. Figure 15 illustrates the positions adopted by the carrier elements during bending of the carrier. In practice, of course, the carrier will be embedded in the materal 14. In Figure 15, the mouth of the channel is of course facing in the direction of the arrows A.

Figure 16 corresponds to Figure 14, but shows the case where the flexible longitudinal members 28A,28B lie in the side walls of the channel but adjacent to, though just above, the base of the channel. Figure 17 again shows how the members 28A,28B control the position of the neutral bending axis when the carrier is bent through a series of "S" bends so that the neutral bending axis again corresponds to the plane in which the members 28A,28B lie. Therefore, when the carrier is embedded in the flexible material 14, the material more inwardly of each bend than this neutral bending axis will be subjected to compression, while the material more outwardly of this neutral bending axis at each bend will be subjected to tension.

In Figure 17, the mouth of the channel of the carrier is of course facing in the direction of the arrows A.

In the carrier shown in Figure 18, both of the flexible longitudinal members 28A,28B are incorporated in the same side wall of the channel. Figure 18 shows the configuration adopted by the carrier when it is bent through a series of "S" bends with the mouth of the channel facing into the paper. Therefore, the flexible embedding material 14 (not visible in Figure 19) along the side of the channel of the carrier incorporating the members 28A,28B will be neither compressed nor stretched during bending of the strip in the form shown in Figure 19. However, the remainder of the material 14 will be either stretched or compressed according to the direction of the bends.

In the carrier of Figure 20, there is only a single flexible longitudinal member 28, this being incorporated to run along the mid-point of the base of the channel. Figure 21 shows bending of such a carrier when incorporated into the flexible material 14 (not visible in the Figure), with the mouth of the channel of the carrier facing in the direction of the arrows A.

The flexible material 14 along the base of the channel will therefore be neither compressed nor stretched through the bends, but the remainder of the material 14 will be stretched or compressed according to the direction of the bends.

It will be appreciated that the carriers described enable the sealing, trimming or finishing strips in which they are incorporated (see Figure 22) to be longitudinally compressed. The or each flexible longitudinal member 28 either is itself longitudinally compressible or bends to permit longitudinal compressibility of the strip. This longitudinal compressibility of the strip enables the strip to be made slightly longer than necessary and then compressed to the required length.

The positions shown for the flexible longitudinal members 28A,28B (or 28 in the case of Figures 20 and 21) are shown purely by way of example. As illustrated in Figures 1 to 13, the manufacturing methods permit simple adjustment of the position of these members (or member).

In certain circumstances, more than two such members may be used.

## Claims

1. A longitudinally extending reinforcing carrier for a flexible longitudinally extending strip (10), including longitudinally extending carrier element means (22A,22B,50) comprising first and second carrier element means (22A,22B) superimposed one on the other, and at least one flexible longitudinal substantially inextensible member (28A,28B) secured to and extending along the carrier element means (22A,22B,50) at a predetermined position relative to its longitudinal axis with the flexible longitudinal substantially inextensible member (28A,28B) clamped between the first and second carrier element means (22A,22B), **characterised in that** the first carrier element means (22A) comprises a plurality of first separate carrier elements extending side-by-side and parallel to each other and extending widthwise of the carrier, and the second carrier element means (22B) comprises a plurality of second separate carrier elements extending side-by-side and parallel to each other and extending widthwise of the carrier, each first carrier element being superimposed on a respective one of the second carrier elements.

2. A carrier according to claim 1, **characterised in that** the longitudinal substantially inextensible member (28A,28B) is secured at such predetermined position relative to the longitudinal axis of the carrier that it controls the position of the neutral bending axis in the strip.

3. A carrier according to claim 1 or 2, **characterised in that** each superimposed pair (58A,58B) of first and second carrier elements comprise respective longitudinally adjacent portions of a thin longitudinally extending blank (50).

4. A carrier according to claim 1,2 or 3, **characterised in that** each pair (32A,32B,58A,58B...) of superimposed first and second carrier elements is spaced in the longitudinal direction of the carrier from and between the two immediately adjacent pairs thereof.

5. A carrier according to any preceding claim, **characterised in that** there is a single flexible longitudinal substantially inextensible member (28).

6. A carrier according to claim 5, **characterised in that** the single flexible longitudinal substantially inextensible member (28) is positioned to coincide with the longitudinal axis of the carrier.

7. A carrier according to any one of claims 1 to 4, **characterised in that** there are two of the flexible longitudinal substantially inextensible members (28A,28B) arranged on opposite sides of the longitudinal axis of the carrier.

8. A carrier according to claim 7, **characterised in that** the two flexible longitudinal substantially inextensible members (28A,28B) are disposed symmetrically with reference to the longitudinal axis of the carrier.

9. A carrier according to any preceding claim, **characterised in that** it is of channel shape.

10. A carrier according to claim 5, **characterised in that** it has channel shape, and **in that** the single flexible longitudinal substantially inextensible member (28) lies substantially centrally in the base of the channel.

11. A carrier according to claim 7, **characterised in that** it has channel shape, and **in that** the two flexible longitudinal substantially inextensible members (28A, 28B) are positioned one in each side wall of the channel.

12. A carrier according to any one of claims 1 to 4, **characterised in that** it has channel shape, and **in that** there are two of the flexible longitudinal substantially inextensible elements (28A,28B), both positioned in the same side wall of the channel.

13. A carrier according to any preceding claim, **characterised in that** the first and second carrier element means (22A,22B) are secured together by welding.

14. A carrier according to any preceding claim, **characterised in that** the or each flexible longitudinal substantially inextensible member (28) is a wire or thread.

15. A carrier according to any one of claims 1 to 13, **characterised in that** the or each flexible longitudinal substantially inextensible member (28) is a metallic wire.

16. A carrier according to any one of claims 1 to 13, **characterised in that** the or each flexible longitudinal substantially inextensible member (28) is a glass fibre thread.

17. A carrier according to any preceding claim, **characterised in that** the or each flexible longitudinal substantially inextensible member (28) permits longitudinal compression of the carrier.

18. A longitudinal flexible strip, comprising flexible material and incorporating a carrier, **characterised in that** the carrier is according to any preceding claim.

19. A strip according claim 18, **characterised in that** it is in the form of a sealing, trimming, finishing or glass-guiding strip for a motor vehicle body.

20. A strip according to claim 18 or 19, **characterised in that** the flexible material is plastics or rubber material.

21. A method of manufacturing a reinforcing longitudinally extending carrier for a flexible longitudinally extending strip (10), including the steps of forming longitudinally extending carrier element means (22A,22B,50) by forming first and second substantially identical carrier element means (22A,22B), and securing at least one flexible longitudinal substantially inextensible member (28A,28B) to and extending it along the carrier element means (22A,22B,50) at a predetermined position relative to its longitudinal axis by superimposing one of the carrier element means (22A) on the other (22B) with the flexible longitudinally extending substantially inextensible member (28A,28B) between them, and securing the first and second carrier element means (22A,228) together so as to fix the flexible longitudinal substantially inextensible member (28A,28B) in the predetermined position, **characterised in that** the first carrier element means (22A) is formed by producing a plurality of separate carrier elements extending side-by-side and parallel to each other and extending widthwise of the carrier, and the second carrier element means (22B) is formed by producing a plurality of separate carrier elements extending side-by-side and parallel to each other and extending widthwise of the carrier, each first carrier element being superimposed as a respective one of the second carrier elements.

22. A method according to claim 21, **characterised in that** the flexible longitudinal substantially inextensible member (28A,28B) is secured in such predetermined position relative to the longitudinal axis of the carrier that it controls the neutral bending axis of the strip.

23. A method according to claim 21 or 22, **characterised in that** each carrier element means (22A,22B) is formed by producing side-by-side and parallel slots (42) in a respective thin longitudinally extending blank with the slots (42) extending widthwise of the longitudinal axis of the blank and stopping short of each longitudinal edge region (26A,26B) of the blank, and **in that** the superimposition step comprises the step of placing one such blank on the other with the slots (42) of the blanks mutually aligned, the longitudinal edge regions (26A,26B) of the blanks being removed and discarded after the securing step.

24. A method according to claim 23, **characterised in that** the slots (42) are produced in each blank by initially producing side-by-side parallel slits (40) therethrough, each slit (40) stopping short of each longitudinal edge region of the blank, and carrying out a thinning-down operation along the longitudinal edge regions (26A,26B) of each blank whereby to convert each slit (40) into a respective one of the slots (42).

25. A method according to claim 21 or 22, **characterised in that** the first and second carrier element means comprise respective longitudinally adjacent portions of a thin longitudinally extending blank and are formed by producing side-by-side parallel slots (54) extending widthwise across the blank and across both longitudinal adjacent portions thereof and stopping short of the longitudinally extending edge regions (50A,50B) of the blank, and **in that** the superimposition step comprises the step of folding one longitudinal adjacent portion onto the other so that one longitudinally extending edge region (50A) is superimposed onto the other (50B), the superimposed longitudinally extending edge regions (50A,50B) being removed and discarded after the securing step.

26. A method according to any one of claims 21 to 25, **characterised by** the further step of carrying out a bending operation whereby the carrier with the first and second carrier element means (22A,22B), with the or each flexible longitudinally extending substantially inextensible member (28A,28B) between them, is bent into channel-shape.

27. A method of making a longitudinally extending flexible strip, with flexible material in which is embedded a carrier, **characterised by** the steps of producing a reinforcing carrier according to the method of any one of claims 21 to 26, and embedding the carrier in the strip.

28. A method according to claim 27, **characterised in that** the embedding step comprises the step of extruding the flexible material over the carrier.

29. A method according to claim 28, **characterised in that** the flexible material is plastics or rubber material.

## Patentansprüche

1. Langgestreckter Verstärkungsträger für eine flexible, sich in Längsrichtung erstreckende Leiste (10) mit sich der Länge nach erstreckenden Trägerelementmitteln (22A, 22B, 50), welche erste und zweite jeweils übereinandergelegte Trägerelementmittel (22A, 22B) und mindestens ein flexibles, in Längsrichtung im wesentlichen nicht streckbares daran befestigtes Teil (28A, 28B) umfassen, welches befestigt ist an und sich erstreckt entlang des Trägerelementmittels (22A, 22B, 50) an einer festgelegten Position relativ zu dessen Längsachse, wobei das flexible, in Längsrichtung im wesentlichen nicht streckbare Teil (28A, 28B) zwischen den ersten und zweiten Trägerelementmitteln (22A, 22B) eingespannt ist,
**dadurch gekennzeichnet,**
**daß** das erste Trägerelementmittel (22A) eine Mehrzahl von ersten getrennten Trägerelementen umfaßt, welche sich nebeneinander und jeweils parallel zueinander erstrecken und sich über die Breite des Trägers erstrecken, und daß das zweite Trägerelementmittel (22B) eine Mehrzahl von zweiten getrennten Trägerelementen umfaßt, die sich nebeneinander und jeweils parallel zueinander erstrecken und sich über die Breite des Trägers erstrecken, wobei jedes erste Trägerelement auf ein entsprechendes der zweiten Trägerelemente gelegt ist.

2. Träger nach Anspruch 1, **dadurch gekennzeichnet, daß** das der Länge nach im wesentlichen nicht streckbare Teil (28A, 28B) an einer derartigen vorbestimmten Position relativ zur Längsachse des Trägers befestigt ist, daß es die Position der neutralen Biegungsachse in der Leiste kontrolliert.

3. Träger nach Anspruch 1 oder 2, **dadurch gekennzeichnet, daß** jedes übereinandergelegte Paar (58A, 58B) der ersten und zweiten Trägerelemente entsprechende, in Längsrichtung benachbarte Teile eines dünnen sich in Längsrichtung erstreckenden Streifens (50) aufweist.

4. Träger nach Anspruch 1, 2 oder 3, **dadurch gekennzeichnet, daß** jedes Paar (32A, 32B, 58A, 58B...) der übereinandergelegten ersten und zweiten Trägerelemente in Längsrichtung des Trägers mit Abstand zu und zwischen den beiden direkt angrenzenden Paaren angeordnet ist.

5. Träger nach einem der vorangehenden Ansprüche, **dadurch gekennzeichnet, daß** er ein einzelnes flexibles, in Längsrichtung im wesentlichen nicht streckbares Teil (28) aufweist.

6. Träger nach Anspruch 5, **dadurch gekennzeichnet, daß** das einzelne flexible, in Längsrichtung im wesentlichen nicht streckbare Teil (28) derart angeordnet ist, daß es mit der Längsachse des Trägers zusammenfällt.

7. Träger nach einem der Ansprüche 1 bis 4, **dadurch gekennzeichnet, daß** es zwei flexible, in Längsrichtung im wesentlichen nicht streckbare Teile (28A, 28B) aufweist, die an sich gegenüberliegenden Seiten der Längsachse des Trägers angeordnet sind.

8. Träger nach Anspruch 7, **dadurch gekennzeichnet, daß** die beiden flexiblen, in Längsrichtung im wesentlichen nicht streckbaren Teile (28A, 28B) symmetrisch im Hinblick auf die Längsachse des Trägers angeordnet sind.

9. Träger nach einem der vorangegangenen Ansprüche, **dadurch gekennzeichnet, daß** er kanalförmig ist.

10. Träger nach Anspruch 5, **dadurch gekennzeichnet, daß** er kanalförmig ist, und daß das einzelne flexible, in Längsrichtung nicht streckbare Teil (28) im wesentlichen zentral im Boden des Kanals liegt.

11. Träger nach Anspruch 7, **dadurch gekennzeichnet, daß** er kanalförmig ist, und daß die beiden flexiblen, in Längsrichtung im wesentlichen nicht streckbaren Teile (28A, 28B) jeweils in jeder Seitenwand des Kanals angeordnet sind.

12. Träger nach einem der Ansprüche 1 bis 4, **dadurch gekennzeichnet, daß** er kanalförmig ist, und daß er zwei flexible, in Längsrichtung im wesentlichen nicht streckbaren Elemente (28A, 28B) aufweist, jeweils in dergleichen Seitenwand des Kanals angeordnet.

13. Träger nach einem der vorangegangenen Ansprüche, **dadurch gekennzeichnet, daß** das erste und zweite Trägerelementmittel (22A, 22B) durch Schweißen miteinander verbunden sind.

14. Träger nach einem der vorangegangenen Ansprüche, **dadurch gekennzeichnet, daß** das oder jedes flexible, in Längsrichtung im wesentlichen nicht streckbare Teil (28) ein Draht oder Faden ist.

15. Träger nach einem der Ansprüche 1 bis 13, **dadurch gekennzeichnet, daß** der oder jedes flexible, in Längsrichtung im wesentlichen nicht streckbare Teil (28) ein Metalldraht ist.

16. Träger nach einem der Ansprüche 1 bis 13, **dadurch gekennzeichnet, daß** der oder jedes flexible, in Längsrichtung im wesentlichen nicht streckbare Teil (28) ein Glasfaserfaden ist.

17. Träger nach einem der vorangegangenen Ansprüche, **dadurch gekennzeichnet, daß** der oder jedes flexible, in Längsrichtung im wesentlichen nicht streckbare Teil (28) eine Längskompression des Trägers ermöglicht.

18. In Längsrichtung flexible Leiste, die flexibles Material und einen darin eingearbeitenden Träger aufweist, **gekennzeichnet durch** den Träger nach einem der vorangegangenen Ansprüche.

19. Leiste nach Anspruch 18, daß sie die Form einer Dicht-, Zier-, Abdeck- oder Glasführungsleiste für eine Kraftfahrzeugkarosserie aufweist.

20. Leiste nach Anspruch 18 oder 19, **dadurch gekennzeichnet, daß** das flexible Material Kunststoff oder Gummi ist.

21. Verfahren zur Herstellung eines verstärkenden, langgestreckten Trägers für eine flexible, sich in Längsrichtung erstreckende Leiste (10), welches die Schritte umfaßt Bilden von sich der Länge nach erstreckenden Trägerelementmitteln (22A, 22B, 50) durch Bilden erster und zweiter im wesentlichen identischer Trägerelementmittel (22A, 22B) und Befestigen mindestens eines flexiblen, in Längsrichtung im wesentlichen nicht streckbaren Teils (28A, 28B) an und Erstrecken dieses entlang der Trägerelementmittel (22A, 22B, 50) an einer vorbestimmten Position relativ zu dessen Längsachse, indem eines der Trägerelementmittel (22A) über das andere (22B) mit dem flexiblen, sich in Längsrichtung im wesentlichen nicht streckbaren Teil (28A, 28B) zwischen diesen gelegt wird, und Befestigen der ersten und zweiten Trägerelementmittel (22A, 22B) miteinander, um das flexible, in Längsrichtung im wesentlichen nicht streckbare Teil (28A, 28B) in der vorbestimmten Position zu fixieren, **dadurch gekennzeichnet, daß** das erste Trägerelementmittel (22A) gebildet wird durch Herstellen einer Mehrzahl separaten Trägerelemente, die sich nebeneinander und parallel zueinander erstrecken und sich über die Breite des Träger erstrecken, und das zweite Trägerelementmittel (22B) gebildet wird durch Herstellen einer Mehrzahl von separaten Trägerelementmitteln, die sich nebeneinander und parallel zueinander erstrecken und sich über die Breite des Trägers erstrecken, wobei jedes erste Trägerelement über ein entsprechendes der zweiten Trägerelemente gelegt wird.

22. Verfahren nach Anspruch 21, **dadurch gekennzeichnet, daß** das flexible, der Länge nach im wesentlichen nicht streckbare Teil (28A, 28B) in einer solchen vorbestimmten Position relativ zur Längsachse des Trägers befestigt ist, daß es die neutrale Biegeachse der Leiste kontrolliert.

23. Verfahren nach Anspruch 21 oder 22, **dadurch gekennzeichnet, daß** jedes Trägerelementmittel (22A, 22B) gebildet wird, in dem benachbarte und parallele Rillen (42) in einen entsprechend dünnen, sich der Länge nach erstreckenden Streifen mit den Rillen (42) hergestellt werden, die sich entlang der Breite der Längsachse des Streifens erstrecken, und kurz vor an jedem longitudinalen Randbereich (26A, 26B) des Streifens stoppen, und daß der Schritt des Übereinanderlegens umfaßt den Schritt, daß einer der Streifen auf den anderen Streifen mit Rillen (42) jeweils ausgerichtet gelegt wird, wobei die longitudinalen Randbereiche (26A, 26B) der Streifen entfernt und nach dem Befestigungsschritt verworfen werden.

24. Verfahren nach Anspruch 23, **dadurch gekennzeichnet, daß** die Rillen (42) in jeden Streifen eingearbeitet werden, in dem anfangs nebeneinander parallele Schlitze (40) eingearbeitet werden, wobei jeder Schlitz (40) kurz vor dem longitudinalen Randbereich des Streifens stoppt, und Durchführen eines Verdünnungsvorganges entlang der Längsrichtung der Randbereiche (26A, 26B) jedes Streifens, um jeden Schlitz (40) in eine entsprechende Rille (42) umzuarbeiten.

25. Verfahren nach Anspruch 21 oder 22, **dadurch gekennzeichnet, daß** die ersten rund zweiten Trägerelementmittel entsprechend in Längsrichtung benachbarte Teile einen dünnen, sich in Längsrichtung erstreckenden Streifen aufweisen, und gebildet werden durch Herstellen von nebeneinanderliegenden parallelen Rillen (54), die sich entlang der Breite des Streifens und über beide in Längsrichtung benachbarten Teile erstrecken und kurz vor den sich in Längsrichtung erstreckenden Randbereichen (50A, 50B) des Streifens stoppen, und daß der Schritt des Übereinanderlegens den Schritt umfasst des Faltens eines in Längsrichtung benachbarten Teils auf das andere, so daß ein sich in Längsrichtung erstreckender Bereich (50A) auf den anderen Randbereich (50B) gelegt wird, wobei die übereinandergelegten, sich der Länge nach erstreckenden Randbereiche (50A, 50B) entfernt und nach dem Befestigungsschritt verworfen werden.

26. Verfahren nach einem der Ansprüche 21 bis 25, **gekennzeichnet durch** den weiteren Schritt, daß ein Biegevorgang durchgeführt wird, wodurch der Träger mit den ersten und zweiten Trägerelementmitteln (22A, 22B), mit dem oder jedem flexiblen, sich in Längsrichtung erstreckenden im wesentlichen nicht streckbaren Teil (28A, 28B) dazwischen, in eine Kanalform gebogen wird.

27. Verfahren zur Herstellung einer sich in Längsrichtung erstreckenden, flexiblen Leiste aus flexiblem Material, in welches ein Träger eingebettet ist, **gekennzeichnet durch** die Herstellungsschritte für einen Verstärkungsträger gemäß dem Verfahren nach einem der Ansprüche 21 bis 26, und Einbetten des Trägers in die Leiste.

28. Verfahren nach Anspruch 27, **dadurch gekennzeichnet, daß** der Einbettungsschritt umfaßt den Schritt des Extrudierens des flexiblen Materials über den Träger.

29. Verfahren nach Anspruch 28, **dadurch gekennzeichnet, daß** das flexible Material Kunststoff oder Gummi ist.

## Revendications

1. Support de renforcement, s'étendant longitudinalement, d'une bande souple (10) s'étendant longitudinalement, qui comporte des moyens formant des éléments supports (22A, 22B, 50) s'étendant longitudinalement, qui comprennent des premier et deuxième moyens formant des éléments supports (22a, 22B) superposés l'un à l'autre, et au moins un élément souple longitudinal sensiblement inextensible (28A, 28B) fixé aux moyens formant des éléments supports (22A, 22B, 50), et s'étendant le long de ces moyens, en une position prédéterminée par rapport à son axe longitudinal, l'élément souple longitudinal sensiblement inextensible (28A, 28B) étant serré entre les premier et deuxième moyens formant des éléments supports (22A, 22B), **caractérisé en ce que** le premier moyen formant des éléments supports (22A) comprend une pluralité de premiers éléments supports séparés qui s'étendent côte à côte et parallèlement entre eux ainsi que suivant le sens de la largeur du support et le deuxième élément formant des éléments supports (22B) comprend une pluralité de deuxièmes éléments supports séparés s'étendant côte à côte et parallèlement entre eux ainsi que suivant le sens de la largeur du support, chaque premier élément support étant superposé à l'un, respectifs, des deuxièmes éléments supports.

2. Support selon la revendication 1, **caractérisé en ce que** l'élément longitudinal sensiblement inextensible (28A, 28B) est fixé en une position prédéterminée, par rapport à l'axe longitudinal du support, telle qu'il commande la position de l'axe de flexion neutre dans la bande.

3. Support selon la revendication 1 ou 2, **caractérisé en ce que** chaque paire (58A, 58B), superposée, de premiers et deuxièmes éléments supports comprend des parties longitudinalement adjacentes respectives d'un flanc mince (50) s'étendant longitudinalement.

4. Support selon la revendication 1, 2 ou 3, **caractérisé en ce que** chaque paire (32A, 32B, 58A, 58B...) de premiers et deuxièmes éléments supports superposés est écartée, suivant la direction longitudinale du support, des deux paires qui lui sont immédiatement adjacentes et entre celles-ci,

5. Support selon l'une quelconque des revendications précédentes, **caractérisé en ce qu'**il y a un seul élément souple longitudinal sensiblement inextensible (28).

6. Support selon la revendication 5, **caractérisé en ce que** l'élément souple longitudinal sensiblement inextensible (28) unique est positionné de manière à coïncider avec l'axe longitudinal du support.

7. Support selon l'une quelconque des revendications 1 à 4, **caractérisé en ce qu'**il y a deux des éléments souples longitudinaux sensiblement inextensibles (28A, 28B) qui sont placés sur les côtés opposés de l'axe longitudinal du support.

8. Support selon la revendication 7, **caractérisé en ce que** les deux éléments souples longitudinaux sensiblement inextensibles (28A, 28B) sont disposés symétriquement par rapport à l'axe longitudinal du support

9. Support selon l'une quelconque des revendications précédentes, **caractérisé en ce qu'**il est en forme de canal.

10. Support selon la revendication 5, **caractérisé en ce qu'**il possède une forme de canal et **en ce que** l'élément souple longitudinal sensiblement inextensible (28) unique s'étend sensiblement centralement dans la base du canal.

11. Support selon la revendication 7, **caractérisé en ce qu'**il possède une forme de canal et **en ce que** les deux éléments souples longitudinaux sensiblement inextensibles (28A, 28B) sont placés à raison d'un dans chaque paroi latérale du canal.

12. Support selon l'une quelconque des revendications 1 à 4, **caractérisé en ce qu'**il possède une forme de canal et **en ce qu'**il y a deux des éléments souples longitudinaux sensiblement inextensibles (28A, 28B), qui sont tous deux positionnés dans la même paroi latérale du canal.

13. Support selon l'une quelconque des revendications précédentes, **caractérisé en ce que** les premier et deuxième moyens formant des éléments supports (22A, 22B) sont fixés ensemble par soudage.

14. Support selon l'une quelconque des revendications précédentes, **caractérisé en ce que** l'élément ou chaque élément souple longitudinal sensiblement Inextensible (28) est un fil ou une bande mince.

15. Support selon l'une quelconque des revendications 1 à 13, **caractérisé en ce que** l'élément ou chaque élément souple longitudinal sensiblement inextensible (28) est un fil métallique.

16. Support selon l'une quelconque des revendications 1 à 13, **caractérisé en ce que** l'élément ou chaque élément souple longitudinal sensiblement inextensible (28) est une bande mince en fibre de verre.

17. Support selon l'une quelconque des revendications précédentes, **caractérisé en ce que** l'élément ou chaque élément souple longitudinal sensiblement inextensible (28) permet une compression longitudinale du support

18. Bande souple longitudinale, comprenant une matière souple et Incorporant un support, **caractérisée en ce que** le support est selon l'une quelconque des revendications précédentes.

19. Bande selon la revendication 18, **caractérisée en ce qu'**elle se présente sous la forme d'une bande d'étanchéité, d'une bande pour enjoliveurs, d'une bande de finition ou d'une bande de guidage de vitre, qui sont destinées la carrosserie d'un véhicule à moteur.

20. Bande selon la revendication 18 ou 19, **caractérisée en ce que** la matière souple est une matière plastique ou une matière à base de caoutchouc.

21. Procédé de fabrication d'un support de renforcement, s'étendant longitudinalement, destiné à une bande souple (10), s'étendant longitudinalement, qui comprend les opérations suivantes : former des moyens formant des éléments supports s'étendant longitudinalement (22A, 22B, 50) en formant des premier et deuxième moyens formant des éléments supports (22A, 22B) sensiblement identiques, et fixer au moins un élément souple longitudinal sensiblement inextensible (28A, 28B) aux moyens formant des éléments supports (22A, 22B, 50) et prolonger celui-ci le long des moyens formant des éléments supports (22A, 22B, 50) en une positon prédéterminée par rapport à son axe longitudinal en superposant l'un des moyens formant des éléments supports (22A) à l'autre (22B), l'élément souple s'étendant longitudinalement sensiblement inextensible (28A, 28B) étant entre eux, et fixer ensemble les premier et deuxième moyens formant des éléments supports (22A, 22B) afin de fixer l'élément souple longitudinal sensiblement inextensible (28A, 28B) dans la position prédéterminée, **caractérisé en ce qu'**on forme le premier moyen formant des éléments supports (22A) en produisant une pluralité d'éléments supports séparés s'étendant côte à côte et parallèlement entre eux ainsi que suivant le sens de la largeur du support, et on forme le deuxième moyen formant des éléments supports (22B) en produisant une pluralité d'éléments supports séparés s'étendant côte à côté et parallèlement entre eux ainsi que suivant le sens de la largeur du support, chaque premier élément support se superposant à l'un respectif des deuxièmes éléments supports.

22. Procédé selon la revendication 21, **caractérisé en ce que** l'on fixe l'élément souple longitudinal sensiblement inextensible (28A, 28B) en une position prédéterminée, par rapport à l'axe longitudinal du support, telle qu'il commande l'axe de flexion neutre de la bande.

23. Procédé selon la revendication 21 ou 22, **caractérisé en ce qu'**on forme chaque moyen formant des éléments supports (22A, 22B) en produisant des rainures (42), disposées côte à côte et parallèles, dans un flanc mince, s'étendant longitudinalement, respectif, les rainures (42) s'étendant suivant le sens de la largeur de l'axe longitudinal du flanc et s'arrêtant à peu de distance de chaque région bord longitudinale (26A, 26B) du flanc, et **en ce que** l'opération de superposition comprend l'opération consistant à placer un semblable flanc sur l'autre flanc de façon que les rainures (42) des flancs soient mutuellement alignées, les régions bords longitudinales (26A, 26B) des flancs étant retirées et éliminées après l'opération de fixation.

24. Procédé selon la revendication 23, **caractérisé en ce qu'**on produit les rainures (42) de chaque flanc en produisant initialement des fentes disposées côte à côte et parallèles (40) à travers les flancs, chaque fente (40) s'arrêtant à peu de distance de chaque région bord longitudinale du flanc, et en effectuant une opération d'amincissement le long des régions bords longitudinales (26A, 26B) de chaque flanc de manière à ainsi convertir chaque fente (40) en l'une, respectives, des rainures (42).

25. Procédé selon la revendication 21 ou 22, **caractérisé en ce que** les premier et deuxième moyens formant des éléments supports comprennent des parties longitudinalement adjacentes respectives d'un flanc mince s'étendant longitudinalement, et on les forme en produisant des rainures parallèles disposées côte à côte (54) qui s'étendent suivant le sens de la largeur sur le flanc et sur ses deux parties adjacentes longitudinales et qui s'arrêtent à peu de distance des régions bords s'étendant longitudinalement (50A, 50B) du flanc, et **en ce que** l'opération de superposition comprend l'opération consistant à plier une partie longitudinale adjacente sur l'autre de façon qu'une région bord s'étendant longitudinalement (50A) se superpose à l'autre (50B), les régions bords, s'étendant longitudinalement, superposées (50A, 50B) étant retirées et éliminées après l'opération de fixation.

26. Procédé selon l'une quelconque des revendications 21 à 25, **caractérisé par** l'opération supplémentaire consistant à effectuer une opération de flexion, grâce à quoi on fléchit suivant une forme de canal le support ayant les premier et deuxième moyens formant des éléments supports (22A, 22B), l'élément ou chaque élément souple s'étendant longitudinalement sensiblement inextensible (28A, 28B) étant entre eux.

27. Procédé de fabrication d'une bande souple s'étendant longitudinalement, au moyen d'une matière souple dans laquelle est encastré un support, **caractérisé par** les opérations consistant à produire un support de renforcement selon le procédé de l'une quelconque des revendications 21 à 26, et à encastrer le support dans la bande.

28. Procédé selon la revendication 27, **caractérisé en ce que** l'opération d'encastrement comprend l'opération consistant à extruder la matière souple sur le support.

29. Procédé selon la revendication 28, **caractérisé en ce que** la matière souple est faite de matière plastique ou de matière à base de caoutchouc.
